# FASCICULE DE BREVET EUROPEEN

(11) **EP 1 342 754 B1**
(45) Date de publication et mention de la délivrance du brevet: **26.03.2008**
(21) Numéro de dépôt: 03290360.1
(22) Date de dépôt: 14.02.2003
(51) Int. Cl.: C08L 77/00, C08L 77/02, C08L 77/06, C08K 5/00

(54) **Composition à base de polyamide pour des tuyaux flexibles contenant du pétrole ou du gaz**
Polyamidharzzusammensetzung zum Gebrauch in flexiblen Schläuchen zum Transport von Öl und Gas
Polyamide composition for use in oil or gas transporting flexible hoses

(30) Priorité: 04.03.2002 FR 0202689
(43) Date de publication de la demande: 10.09.2003
(60) Demande divisionnaire: 06001390.1
(73) Titulaire: ARKEMA FRANCE, 92700 Colombes (FR)
(72) Inventeur: Jacques, Bernard, 1428 Lillois (BE); Pees, Bernard, 27170 Beaumontel (FR); Werth, Michael, 27300 Bernay (FR)
(74) Mandataire: Delprat, Corinne

(56) Documents cités:
- EP-A1- 0 356 729
- EP-A1- 0 364 859
- FR-A1- 2 343 018
- US-A- 4 315 408
- US-A- 4 356 286

## Description

### [Domaine de l'invention]

La présente invention concerne l'utilisation d'une composition à base de polyamide pour des tuyaux flexibles contenant du pétrole ou du gaz dans le cadre d'une utilisation offshore. Dans l'exploitation des gisements de pétrole ou de gaz sous la mer (off shore) il est nécessaire d'utiliser des tuyaux flexibles pour relier les différents dispositifs autour de la plateforme. Ces tuyaux doivent résister au pétrole chaud, au gaz, à l'eau et aux mélanges d'au moins deux de ces produits pendant des durées pouvant atteindre 20 ans. Ces tuyaux sont en général constitués d'une couche intérieure métallique non étanche formée par une bande en métal profilée enroulée en hélice telle qu'un feuillard agrafé et qui donne la forme au tuyau, puis sur cette couche on extrude un polymère pour donner l'étanchéité et enfin on ajoute d'autres couches de protection et de renfort telles que des nappes de fibres métalliques et des caoutchoucs. Pour des températures de service en dessous de 40°C le polymère est du HDPE (polyéthylène haute densité), jusqu'à 90°C c'est du polyamide et au delà jusqu'à 130°C c'est du PVDF (polyfluorure de vinylidène). La présente invention concerne les tuyaux dans lesquels le polymère est du polyamide. On a mis au point une nouvelle composition à base de polyamide qui présente une meilleure résistance au vieillissement..

### [l'art antérieur et le problème technique]

Le brevet US 4950436 décrit des tuyaux pour les fluides d'un système d'air conditionné comprenant une couche intérieure en polyamide contenant éventuellement des polyoléfines telles que du PE (polyéthylène), du PP (polypropylène) ou de l'EPR (caoutchouc éthylène propylène) puis, en allant vers l'extérieur du tube, une couche de caoutchouc puis enfin des couches de renfort en textile.

Le brevet DE 4132123 décrit des tuyaux pour la même application que le brevet précédent comprenant une couche intérieure en polyamide contenant des caoutchoucs acryliques pouvant être des copolymères d'un ester acrylique et d'acrylonitrile puis en allant vers l'extérieur du tube, une couche de renfort en textile et enfin une couche extérieure en caoutchouc pouvant être du NBR (abréviation du caoutchouc nitrile butadiène).

Le brevet FR 1592857 décrit des mélanges de polyamides, de caoutchouc nitrile et de plastifiant. La nature du caoutchouc nitrile n'est pas précisée. La plupart des exemples concernent des mélanges à base d'un copolyamide de température de fusion 120°C. L'exemple 3 décrit des mélanges de 75 parties de PA 6, 25 parties de caoutchouc nitrile et 30 à 52 parties de resorcinol comme plastifiant. Ces mélanges sont utiles comme adhésifs.

Le brevet DE 3439312 décrit des tuyaux pour les fluides d'un système d'air conditionné constitués d'une couche intérieure qui est un mélange de 30 à 70% (de préférence 40 à 60) en poids polyamide et de 70 à 30% (de préférence 60 à 40) de caoutchouc et d'une couche extérieure en polyoléfine ayant des groupes fonctionnels pour adhérer sur la couche intérieure. Le caoutchouc peut être du NBR.

Le brevet US 4567238 décrit des tuyaux constitués d'un mélange de polyamide et d'un mélange d'un caoutchouc NBR portant des fonctions époxy avec un caoutchouc épichlorhydrine (c'est à dire un caoutchouc contenant des fonctions ether) et un diacide pour réticuler les caoutchoucs. L'exemple le plus riche en polyamide contient 80% de PA 12, 10% de NBR ayant des fonctions époxy et de caoutchouc Hydrin décrit comme un copolymère d'épichlorhydrine et d'oxyde d'éthylène.

Aucun de ces art antérieurs ne concerne les tuyaux pour l'off shore ni leur vieillissement sous l'effet de la température ou du contact avec des fluides. Le polyamide utilisé dans les tuyaux off shore est en général du PA 11 ou du PA 12 mais il est nécessaire d'y ajouter un plastifiant pour l'extruder plus facilement et aussi pour réduire le module de flexion. Ces polyamides conviennent mais ils ont l'inconvénient de vieillir trop vite. On entend par vieillissement une diminution des propriétés mécaniques telles que l'allongement à la rupture et la résistance à la traction. Le vieillissement est d'autant plus rapide que la température d'utilisation est élevée. On a maintenant découvert que le vieillissement était du non seulement à l'hydrolyse lente du polyamide sous l'effet de l'humidité des produits transportés mais aussi à une réorganisation de la structure microcristalline du polyamide provoquée par le départ du plastifiant. Le plastifiant est extrait par le contact avec le pétrole ou le gaz. on a donc réduit la quantité de plastifiant et avantageusement ajouté un élastomère NBR ou H-NBR (NBR hydrogéné).

Le brevet US 5614683 a décrit le suivi du vieillissement du PA 11 par l'évolution de sa masse molaire. Rien ne concerne le plastifiant et aucun remède n'est proposé.

### [Brève description de l'invention]

La présente invention est une composition comprenant en poids :
- 70 à 96% d'au moins un polyamide choisi parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12,
- 4 à 10% d'un plastifiant,
- 0 à 25% d'un élastomère NBR ou H-NBR,
- la somme des quantités de plastifiant et d'élastomère est comprise entre 4 et 30%.

Ces compositions peuvent être fabriquées par mélange à l'état fondu des différents constituants selon les techniques habituelles de matières thermoplastiques. Elles sont particulièrement utiles pour des tuyaux utilisés dans l'exploitation des champs de pétrole et de gaz off shore. Elles ont une très bonne résistance au vieillissement.

L'invention concerne aussi les tuyaux comprenant au moins une couche de cette composition, utilisés en off shore.

### [Description détaillée de l'invention}

**S'agissant des polyamides** ils ont une masse moléculaire moyenne en nombre *M̅n̅* en général supérieure ou égale à 25000 et avantageusement comprise entre 40000 et 100000. Leur masse moléculaire moyenne en poids *M̅w̅* est en général supérieure à 40000 et avantageusement comprise entre 50000 et 100000. Leur viscosité inhérente (mesurée à 20°C pour un échantillon de 5.10-3 g par cm3 de méta-crésol) est en général supérieure à 0,7.

A titre d'exemple de polyamides aliphatiques résultant de la condensation d'une diamine aliphatique ayant de 6 à 12 atomes de carbone et d'un diacide aliphatique ayant de 9 à 12 atomes de carbone on peut citer :
le PA 6-12 résultant de la condensation de l'hexaméthylène diamine et de l'acide 1,12-dodecanedioïque,
le PA 9-12 résultant de la condensation de la diamine en C9 et de l'acide 1,12-dodecanedioïque,
le PA 10-10 résultant de la condensation de la diamine en C10 et de l'acide 1,10-decanedioïque,
le PA 10-12 résultant de la condensation de la diamine en C9 et de l'acide 1,12-dodecanedioïque.

Quant aux copolyamides 11/12 ayant soit plus de 90% de motifs 11 soit plus de 90% de motifs 12, ils résultent de la condensation de l'acide amino 1-undecanoïque avec le lauryllactame (ou l'alpha omega amino acide en C12).

Avantageusement le polyamide contient un catalyseur organique ou minéral qu'on a ajouté au cours de la polycondensation. De préférence c'est de l'acide phosphorique ou hypophosphorique. La quantité de catalyseur peut être jusqu'à 3000 ppm par rapport à la quantité de polyamide et avantageusement entre 50 et 1000 ppm.

On ne sortirait pas du cadre de l'invention en utilisant un mélange de polyamides.

Avantageusement le polyamide est le PA 11 ou le PA 12.

**S'agissant du plastifiant** il est choisi parmi les dérivés de benzène sulfonamide, tels que le n-butyl benzène sulfonamide (BBSA), l'éthyl toluène sulfonamide ou le N-cyclohexyl toluène sulfonamide; les esters d'acides hydroxy-benzoïques, tels que le parahydroxybenzoate d'éthyl-2 hexyle et le parahydroxybenzoate de décyl-2 hexyle ; les esters ou éthers du tétrahydrofurfuryl alcool, comme l'oligoéthylèneoxytétrahydrofurfurylalcool ; et les esters de l'acide citrique ou de l'acide hydroxy-malonique, tels que l'oligoéthylèneoxy malonate. Un plastifiant particulièrement préféré est le n-butyl benzène sulfonamide (BBSA). On ne sortirait pas du cadre de l'invention en utilisant un mélange de plastifiants.

Le plastifiant peut être introduit dans le polyamide pendant la polycondensation ou ultérieurement.

**S'agissant de l'élastomère** ces produits sont connus en eux mêmes, ils sont décrits par exemple dans ULLMAN'S ENCYCLOPEDIA OF INDUSTRIAL CHEMISTRY, 5e édition Vol A 23 pages 255-261, le contenu étant incorporé dans la présente demande. On préfère le NBR. L'élastomère peut aussi être réticulé, il suffit que le NBR porte des fonctions carboxyliques ou époxy et d'ajouter un réticulant pourvu que ceci ne provoque pas une dégradation du polyamide.

S'agissant des proportions, la proportion de plastifiant est avantageusement entre 5 et 9% et celle d'élastomère est entre 8 et 22% la somme des quantités de plastifiant et d'élastomère étant comprise entre 13 et 30%.

La quantité de polyamide est avantageusement comprise entre 72 et 92% pour respectivement 28 à 8% de la somme des quantités de plastifiant et d'élastomère.

La composition de l'invention peut comprendre aussi des additifs tels que des antioxydants, des anti-U.V., des pigments et des stabilisants. Ces produits sont connus en eux-mêmes, ce sont ceux utilisés habituellement dans les polyamides. La quantité de ces additifs peut être représenter jusqu'à 5 parties et avantageusement entre 0,5 et 2 parties en poids pour 100 parties de l'ensemble du polyamide, du plastifiant et de l'élastomère. Cette composition est préparée par mélange à l'état fondu des différents constituants dans tout dispositif de mélange et de préférence une extrudeuse. La composition est le plus souvent récupérée sous forme de granulés. Avantageusement on ajoute du stéarate de calcium comme anti mottant à ces granulés, ceci se fait par simple mélange à sec. Ces granulés sont ensuite refondus et extrudés sur la gaine métallique qui doit former la couche intérieure du tuyau. Il est recommandé de bien sécher ces granulés avant de les fondre pour les mettre en oeuvre. Le taux d'humidité est avantageusement en dessous de 0,2% et de préférence en dessous de 0,08%.

### [Exemples]

Nous avons utilisé les produits suivants :
- **NBR**:: Copolymère statistique Acrylonitrile (19%) / Butadiène de densité = 0,98 g/cm3 et de viscosité Mooney = 45 ± 5 ML (1+4) 100°C.
- **PA11**:: Polyamide 11 de densité 1,030 g/cm3 et de viscosité inhérente ISO = 1,35 dL/g.
- **BBSA** :: N-butyl benzène sulfonamide (plastifiant).
- ***Stab** :*: Système d'additifs stabilisants « chaleur et lumière »

Dans tous les exemples la viscosité inhérente est mesurée à 20°C en solution à 5.10-3 g de polyamide par cm3 de metacresol. La valeur ISO corrigée de la viscosité inhérente est obtenue en utilisant la formule suivante :
ηISO corrigée= rl mesurée*100/ ((100% - X%)*1,034)
avec X %= taux d'extractible

Le NBR est préalablement broyé après refroidissement à l'azote liquide sur concasseur LANCELIN® (pré-broyage sur grille de 16 mm puis reprise sur grille de 6mm ) en présence d'un agent anti-mottant (stéarate de calcium).

Les produits sont compoundés en extrudeuse bi-vis co-rotative de type WERNER® 40 (D/L = 40). Cette dernière comprend 10 zones numérotées de F1 à F9 et la filière. La zone d'alimentation F1 n'est pas chauffée et on adopte un profil de températures plat à 270 °C pour l'ensemble des autres zones.

Le polyamide, le NBR et l'additif *Stab* sont introduits en zone F1 sous forme d'un dry-blend (mélange à sec) par l'intermédiaire de deux doseurs pondéraux séparés.

Le plastifiant (BBSA) est introduit par une pompe doseuse en zone F6-7. Le dégazage sous vide relatif de 360 mm Hg est effectué en zone F4.

Le débit d'extrusion en sortie de la filière est de 70 kg/h pour une vitesse de rotation des vis de 300 rpm (tours par minute). Le jonc est granulé après refroidissement dans un bac à eau. Les granulés des différents essais sont alors séchés à 80°C durant 12 heures et conditionnés en sacs étanches après vérification des taux d'humidités (% eau = 0,08 %).

Le tableau 1 rassemble les compositions des différents mélanges réalisés ainsi que quelques informations obtenues lors de l'extrusion (températures et pressions en tête, couple). Les % indiqués sont des % massiques. Le vide est régulé de manière à ce que la pression en tête soit constante d'un essai à l'autre 17/18 bars.

**Tableau 1**

| Essais | 1 | 2 comparatif | 3 | 4 |
|---|---|---|---|---|
| PA11 (%) | 91,8 | 86,8 | 80,1 | 73,3 |
| BBSA (%) | 7 | 12 | 8,7 | 5,5 |
| NBR | 0 | 0 | 10 | 20 |
| *Stab (%)* | 1,2 | 1,2 | 1,2 | 1,2 |
| T° mat. Tête (°C) | 279 | 277 | 279 | 285 |
| Pr. Tête (bars) | 18 | 17/18 | 9/10 | 9/10 |
| Couple (%) | 70 | 74 | 67 | 63 |

La morphologie des alliages PA11 / NBR est vérifiée par microscopie électronique à balayage (MEB) des faciès de fracture cryogénique après marquage à 1'OsO4. Il est observé pour les deux échantillons (essais 3 et 4) une dispersion relativement homogène des nodules de NBR dans la matrice PA11. En ce qui concerne l'essai 3 à 10% NBR, les tailles des nodules se situent globalement entre 0,1 µm et 1,5 µm. A l'exception des nodules coalescés, les tailles dans le cas de l'essai 4 à 20 % NBR se situent globalement entre 0,1 µm et 2,7 µm.

Une bande de 2 mm d'épaisseur (découpée en plaques de 200 x 200 x 2 mm3) est préparée par extrusion - calandrage des granulés des essais précédents . L'extrudeuse est de type AMUT® (L/D = 32, D = 70 mm) et fonctionne avec un profil de température plat à 220°C. La calandre est de type AMUT® dotée de 5 rouleaux dont les températures respectives (°C) sont : 45/45/60/20/20.

Ces plaques sont découpées à l'emporte-pièce afin d'obtenir les différents barreaux et éprouvettes utilisés par la suite lors de la caractérisation des compositions ainsi que les études de vieillissement.

Dans le tableau 2, sont regroupées les informations relatives à la masse moléculaire des différents essais après transformation (extrusion-calandrage).

**Tableau 2**

| Essais | 1 | 2 | 3 | 4 |
|---|---|---|---|---|
| Visc. inh. cor ISO | 1,80 | 1,78 | - | - |
| *M̅n̅* | 37800 | 40700 | 28650 | 23950 |
| *M̅w̅* | 77600 | 74080 | 54850 | 51880 |

### Tests de vieillissement

Le vieillissement est réalisé par conservation des éprouvettes (ou/et barreaux) immergées dans l'eau à pH 7 (ou un mélange eau/diesel 2D), à une température convenue (typiquement 110 - 140 °C).

Les échantillons sont placés dans des autoclaves (H = 32 cm, Dint = 8 cm, Vint = 1,5 1) à raison d'une vingtaine d'éprouvettes ISO ½ par autoclave. Celles-ci sont intégralement immergées dans 1 1 d'eau distillée. Puis on réalise l'inertage de chaque autoclave par bullage d'azote durant 3 heures à un débit de N2 de 501/h (désoxygénation). La validation de la méthode d'inertage est réalisée par la mesure directe du taux d'oxygène en sortie (%02 < 2 ppm). Dans le cas d'un vieillissement réalisé dans un mélange eau / pétrole, chacun des fluides est inerté séparément durant 2 h (dans les mêmes conditions que celles décrites ci-dessus) puis réunis (ré ajustage des volumes) et à nouveau inerté durant 1 h.

Ces autoclaves ainsi inertés sont placés dans une étuve réglée à la température souhaitée (typiquement 100 - 140 °) durant toute la durée du vieillissement. Après chaque prélèvement, le fluide est remplacé puis l'autoclave est inertée. Les échantillons sont alors séchés superficiellement et stockés en conditionnement inerté avant la réalisation des différents tests d'évaluation.

Les essais en traction sont réalisés à 23 °C selon la norme ISO 527 1BA, à l'aide d'un dynamomètre robotisé muni d'un extensomètre optique sur les éprouvettes ISO 1BA ½ découpés à l'emporte-pièce dans les plaques extrudés (voir ci-dessus). La vitesse de traction est de 25 mm/min et l'entrefer initial de 25 mm.

Les caractéristiques en flexion (module apparent d'élasticité en flexion) sont déterminés selon la norme ISO 178 :93. L'analyse est réalisée à 23 °C sur des barreaux injectés de dimension 80 x 10 x 4 mm3 sur un appareil dynamométrique de type INSTRON®1175 à une vitesse de 2 mm/min.

La résistance au choc à 23°C ont été évalués sur des barreaux injectés entaillés de dimension 80 x 10 x 4 mm3 selon la norme ISO 179-1/1eA. Le mouton pendule utilisé est de type ZWICK® 5102 et l'entaille pratiquée à l'aide d'une entailleuse automatique NOTCHVIS® (entaille en V de type A). La distance entre appuis est de 62 mm.

Les masses moléculaires sont déterminées par chromatographie d'exclusion stérique (CES) sur un appareil de type WATERS® ALL/GPC 150 muni d'une colonne PLgel MIXED-B 10 µm.

L'échantillon sur base PA (30 mg) est mis en solution à 130°C durant 3h dans de l'alcool benzylique. L'analyse est également réalisée à 130°C.

### Résultats :

**Tableau des résultats propriétés mécaniques, non vieillis**

| Essais | PA11 pur | 1 | 2 | 3 | 4 |
|---|---|---|---|---|---|
| Module de flexion (MPa) | 1030 | 420 | 310 | 300 | 350 |
| Choc Charpy entaillé 23°C (J/m) | + | + | + | ++ | +++ |
| Traction : contrainte à la rupture (MPa) | 50 | 71.1 | 69.2 | 57.5 | 41 |
| Traction : allongement à la rupture (%) | 310 | 372 | 398 | 387 | 302 |
| D poids % à 125°C (Diesel 2D) | 2,5 | -3,5 | -6,5 | 1,40* | 1,46^{*} |

| | | | | | |
|---|---|---|---|---|---|
| (*) essai réalisé dans l'huile ASTM n°3 (huile proche du Diesel 2D) Plus il y a de signes + meilleur est le résultat. | | | | | |

**Tableau des résultats de vieillissement**

| essais | | PA11 pur | 1 | 2 | 3 | 4 |
|---|---|---|---|---|---|---|
| eau à 140°C | ½ vie traction | ++++ | +++ | + | ++ | ++ |
| | *M̅w̅* à ½ vie | 31500 | 31000 | 31000 | 29000 | 29000 |
| eau à 120°C | ½ vie traction | ++++ | +++ | + | ++ | ++ |
| | *M̅w̅* à ½ vie | 39000 | 39000 | 39500 | 35000 | 31000 |
| pétrole et eau à 120°C | ½ vie | +++++ | +++ | + | ++ | ++ |
| | *M̅w̅* à ½ vie | id eau 120°C | id eau 120°C | id eau 120°C | id eau 120°C | id eau 120°C |

La demi-vie traction est le temps au bout duquel l'allongement à la rupture a été divisé par 2.

**Evolution du comportement thermique** (cristallinité) lors de l'extraction du BBSA. On procède à l'extraction du plastifiant en plaçant quelques granulés des compositions 1 (7% de BBSA) et 2 (12% BBSA) dans un tube en verre, sous vide, à 120°C, durant 5 jours. Le taux d'extractible de ces échantillons à l'issue de ces 5 jours est alors nul. Les propriétés thermiques des échantillons avant et après extraction sont déterminées par analyse DSC. Cette analyse est réalisée sous azote selon une norme ISO 11357-1 modifiée sur un appareil de type DSC 7 PERKIN ELMER® dans les conditions suivantes :
- balayage de 20°C à 240°C.
- chauffe 1 / refroidissement / chauffe 2 : 20 / 40 / 20 °C.min-1.

| Essais | | 1 | 2 |
|---|---|---|---|
| Avant extraction | Tf (°C) | 184,1 | 183,7 |
| | □ H 1ère chauffe (J/g) | 42,1 | 41,9 |
| | χ^{c} (%) cristallinité | 20,1 | 21,1 |
| Après extraction | Tf (°C) | 188,7 | 188,4 |
| | □ H 1ère chauffe (J/g) | 46,8 | 49,1 |
| | χ^{c} (%) cristallinité | 22 | 25,6 |

## Revendications

1. Utilisation d'une composition comprenant en poids :
• 70 à 96% d'au moins un polyamide choisi parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12,
• 4 à 10% d'un plastifiant,
• 0 à 25% d'un élastomère NBR ou H-NBR,
• la somme des quantités de plastifiant et d'élastomère est comprise entre 4 et 30%,
comme couche d'étanchéité dans un tuyau flexible contenant du pétrole ou du gaz, ce tuyau flexible étant utilisé dans l'exploitation des gisements de pétrole ou de gaz sous la mer (off shore).

2. Utilisation selon la revendication 1 dans laquelle le polyamide est choisi parmi le PA 11 et le PA 12.

3. Utilisation selon l'une quelconque des revendications précédentes dans laquelle le plastifiant est le BBSA.

4. Utilisation selon l'une quelconque des revendications dans laquelle le polyamide contient un catalyseur choisi parmi l'acide phosphorique et l'acide hypophosphorique.

5. Utilisation selon la revendication 4 dans laquelle la quantité de catalyseur représente jusqu'à 3000 ppm par rapport au polyamide.

6. Utilisation selon la revendication 5 dans laquelle la quantité de catalyseur est comprise entre 50 et 1000 ppm.

7. Utilisation selon l'une quelconque des revendications précédentes dans laquelle la proportion de plastifiant est entre 5 et 9% et celle d'élastomère est entre 8 et 22%, somme des quantités de plastifiant et d'élastomère étant comprise entre 13 et 30%.

8. Utilisation selon l'une quelconque des revendications précédentes dans laquelle la quantité de polyamide est comprise entre 72 et 92% pour respectivement 28 à 8% de la somme des quantités de plastifiant et d'élastomère.

## Claims

1. Use of a composition comprising by weight:
• 70 to 96% of at least one polyamide chosen from PA-11, PA-12, aliphatic polyamides resulting from the condensation of an aliphatic diamine having from 6 to 12 carbon atoms and an aliphatic diacid having from 9 to 12 carbon atoms, and 11/12 copolyamides having either more than 90% of nylon-11 units or more than 90% of nylon-12 units;
• 4 to 10% of a plasticizer;
• 0 to 25% of an NBR or H-NBR elastomer; and
• the sum of the amount of plasticizer and the amount of elastomer is between 4 and 30%, as a sealing layer in a flexible pipe containing oil or gas, this flexible pipe being used in the operation of offshore oil or gas fields.

2. Use according to Claim 1, in which the polyamide is chosen from PA-11 and PA-12.

3. Use according to either of the preceding claims, in which the plasticizer is BBSA.

4. Use according to any one of the claims, in which the polyamide contains a catalyst chosen from phosphoric acid and hypophosphoric acid.

5. Use according to Claim 4, in which the amount of catalyst represents up to 3000 ppm relative to the polyamide.

6. Use according to Claim 5, in which the amount of catalyst is between 50 and 1000 ppm.

7. Use according to any one of the preceding claims, in which the proportion of plasticizer is between 5 and 9% and that of the elastomer is between 8 and 22%, the sum of the amounts of plasticizer and elastomer being between 13 and 30%.

8. Use according to any one of the preceding claims, in which the amount of polyamide is between 72 and 92% for 28 to 8%, respectively, of the sum of the amount of plasticizer and the amount of elastomer.

## Patentansprüche

1. Verwendung einer Zusammensetzung, enthaltend:
• 70 bis 96 Gew.-% mindestens eines unter PA 11, PA 12, aus der Kondensation eines aliphatischen Diamins mit 6 bis 12 Kohlenstoffatomen und einer aliphatischen Disäure mit 9 bis 12 Kohlenstoffatomen resultierenden aliphatischen Polyamiden und 11/12-Copolyamiden mit entweder mehr als 90% 11-Einheiten oder mehr als 90% 12-Einheiten ausgewählten Polyamids,
• 4 bis 10 Gew.-% eines Weichmachers,
• 0 bis 25 Gew.-% eines NBR- oder H-NBR-Elastomers,
• wobei die Summe der Mengen an Weichmacher und Elastomer zwischen 4 und 30 Gew.-% liegt,
als Abdichtungsschicht in einem Öl oder Gas enthaltenden flexiblen Rohr, das bei der Förderung von Öl- oder Gasvorkommen unter dem Meer (Offshore) verwendet wird.

2. Verwendung nach Anspruch 1, bei der das Polyamid unter PA 11 und PA 12 ausgewählt ist.

3. Verwendung nach einem der vorhergehenden Ansprüche, bei der es sich bei dem Weichmacher um BBSA handelt.

4. Verwendung nach einem der vorhergehenden Ansprüche, bei der das Polyamid einen unter Phosphorsäure und Hypophosphorsäure ausgewählten Katalysator enthält.

5. Verwendung nach Anspruch 4, bei der die Katalysatormenge bis zu 3000 ppm, bezogen auf das Polyamid, beträgt.

6. Verwendung nach Anspruch 5, bei der die Katalysatormenge zwischen 50 und 1000 ppm liegt.

7. Verwendung nach einem der vorhergehenden Ansprüche, bei der der Weichmacheranteil zwischen 5 und 9% und der Elastomeranteil zwischen 8 und 22% liegt, wobei die Summe der Mengen an Weichmacher und Elastomer zwischen 13 und 30% liegt.

8. Verwendung nach einem der vorhergehenden Ansprüche, bei der die Polyamidmenge zwischen 72 und 92% für respektive 28 bis 8% der Summe der Mengen an Weichmacher und Elastomer liegt.
